# EUROPEAN PATENT SPECIFICATION

(11) **EP 1 720 887 B1**
(45) Date of publication and mention of the grant of the patent: **02.04.2008**
(21) Application number: 05713201.1
(22) Date of filing: 10.02.2005
(51) Int. Cl.: C07F 5/02, C09J 4/06, C08F 279/02

(54) **AQUEOUS-BASED ADHESIVE FOR BONDING LOW SURFACE ENERGY SUBSTRATES**
KLEBSTOFF AUF WASSERBASIS ZUM KLEBEN VON SUBSTRATEN MIT NIEDRIGER OBERFLÄCHENENERGIE
ADHESIF A BASE D'EAU PERMETTANT DE COLLER DES SUBSTRATS A FAIBLE ENERGIE SUPERFICIELLE

(30) Priority: 23.02.2004 US 546891 P
(43) Date of publication of application: 15.11.2006
(73) Proprietor: Dow Global Technologies Inc., Midland, MI 48674 (US)
(72) Inventor: SONNENSCHEIN, Mark, F., Midland, MI 48640 (US); WENDT, Benjamin, L., Chesaning, MI 48616 (US)
(74) Representative: Raynor, John
(86) International application number: PCT/US2005/004097
(87) International publication number: WO 2005/082912

(56) References cited:
- US-A1- 2002 033 227

## Description

### Background of the Invention

This invention relates to an aqueous-based adhesive for bonding low surface energy substrates. Polyolefins such as polyethylene and polypropylene and copolymers thereof are useful in the fabrication of many objects including automotive trim, shoe soles, toys, and household appliances. These polymers are inexpensive and lightweight and have excellent impact resistance. Unfortunately, the inherent low surface energy of polyolefins inhibits adhesion to most adhesive and coating formulations, which tend to contain polar materials such as urethanes, acrylics, and epoxies. Consequently, efforts have been directed toward pretreating the surface of these low surface energy materials to render them adhesive. Such pretreatments include vapor cleaning, defatting, acid treating, priming, corona discharge treating, or plasma treating. Other efforts to improve adhesion have been directed to the use of adhesion promoters. Unfortunately, such techniques are often cumbersome, costly, and environmentally unsound. Accordingly, it would be advantageous to discover a simple way of applying adhesives to low surface energy substrates without surface pretreatment or adhesion promoters. It would further be advantageous for the adhesive or similar coating to be water based to reduce volatile organic content, odor, and cost.

### Summary of the Invention

The present invention addresses a need in the art by providing, in a first aspect, a 2-part adhesive formulation comprising, in a first part, water, a surfactant, and a protected alkylborane complex and, in a second part, an acrylic monomer and a trialkylborane-displacing initiator. The surfactant is a neutral or based surfactant, or a combination thereof.

In a second aspect, the present invention is a composition comprising water, the surfactant, an acrylic monomer, a trialkylborane-displacing initiator, and a thixotropic agent.

In a third aspect, the present invention is a method comprising the step of contacting a surfactant-stabilized aqueous dispersion of a trialkylborane-organonitrogen complex with a acrylic monomer and a trialkylborane-displacing initiator to form a curing acrylic-based adhesive; and 2) applying the curing adhesive to a low surface energy substrate.

### Detailed Description of the Invention

In a first aspect, the present invention is a 2-part adhesive that comprises, in a first part, water, a surfactant, and a protected alkylborane complex and, in a second part, an acrylic monomer and a trialkylborane-displacing initiator. As used herein, the term "protected alkylborane complex" refers either to a trialkylborane-organonitrogen complex, which is an oxidatively stable complex of a trialkylborane and a nitrogen-containing organic compound, or a heterocyclic borate as described and taught in U.S. Patent 6,646,076, column 3, lines 40-67 to column 4, lines 1-8, and columns 5-14, which description is incorporated herein by reference.

The preferred alkylborane complex is a trialkylborane-organonitrogen complex. The alkyl groups are preferably each independently C₁-C₁₀-alkyl or C₁-C₁₀-alkylcycloalkyl, more preferably C₁-C₅-alkyl. Examples of nitrogen-containing organic compounds include substituted or unsubstituted primary amines, secondary amines, tertiary amines, diamines, pyridines, pyrrolidines, pyrroles, and carbazoles.

Examples of preferred borane-organonitrogen complexes include triethylborane:dimethylaminopropylamine complex, tributylborane:dimethylaminopropylamine complex, triethylborane:pyrrolidine complex, tributylborane:pyrrolidine complex, triethylborane:pyridine complex, tributylborane:pyridine complex, triethylborane:isophorone diamine complex, triethylborane:isophorone diamine complex, tributylborane:isophorone diamine complex, triethylborane:methoxypropylamine complex, and tributylborane:methoxypropylamine complex.

The trialkylborane-organonitrogen complex can be prepared by contacting a trialkylborane compound, either neat or as a trialkyborane etherate complex, with a nitrogen-containing organic compound, preferably with a stoichiometric excess of the nitrogen-containing compound. For example, a preferred tri-*n*-butylborane:3-methoxypropylamine complex contains from about a 1:1.05 to about a 1:1.50 mole ratio of tri-n-butylborane to 3-methoxypropylamine.

The surfactant, which is a neutral or a basic surfactant or a combination thereof, is included in the first part of the 2-part formulation. Examples of suitable surfactants include polyvinyl pyrrolidinones, polyetheramines, polyethylene glycols, polyethylene glycol-polypropylene glycol copolymers, polyacrylamides, hydroxycellulosics, polyvinyl alcohols, polyacrylic acid salts, and polymethacrylic acid salts, and combinations thereof.

The concentration of surfactant in the first part of the formulation is sufficient to increase the shelf-stability of the complex in water, and varies depending on the surfactant used. In general, the concentration of the surfactant is in the range of from about 0.5 to about 25 weight percent, based on the weight of the surfactant, the water, and the complex.

The weight-to-weight ratio of water to the complex is preferably not less than 2:1, more preferably not less than 5:1, and most preferably not less than 10:1, and preferably not more than 100:1, more preferably not more than 50:1, and most preferably not more than 20:1.

The second part of the 2-part adhesive contains an acrylic monomer, a trialkylborane-displacing initiator and, optionally, a thixotropic agent. The term "acrylic monomer" is used herein to refer to an acrylamide monomer, an acrylonitrile monomer, or an acrylate monomer, with acrylate monomers being preferred. Acrylate monomers have the chemical structure: 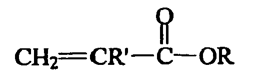 where R is a substituent other than H; preferably alkyl, cycloalkyl, bicycloalkyl, or hydroxyalkyl, more preferably C₁-C₆-alkyl, isonorbornyl, or hydroxyethyl; and R' is a substituent, preferably hydrogen or C₁-C₆-alkyl, more preferably hydrogen, methyl, or ethyl.

Examples of suitable acrylic monomers include acrylonitrile, acrylamide, *n*-methylacrylamide, methyl acrylate, ethyl acrylate, n-propyl acrylate, *n*-butyl acrylate, t-butyl acrylate, isobornyl acrylate, 2-hydroxyethyl acrylate, hydroxypropyl acrylate, glycidyl acrylate and ethyl-*n*-hexyl acrylate, methyl methacrylate, ethyl methacrylate, *n*-propyl methacrylate, *n-*butyl methacrylate, *t*-butyl methacrylate, 2-hydroxyethyl methacrylate, hydroxypropyl methacrylate, hydroxybutyl methacrylate, isobornyl methacrylate, glycidyl methacrylate, tetrahydrofurfuryl methacrylate, and ethyl-*n*-hexyl methacrylate and combinations thereof. More preferred acrylic monomers include 2-hydroxyethyl acrylate, hydroxybutyl methacrylate, and methyl methacrylate and combinations thereof. A most preferred acrylic monomer is methyl methacrylate.

The trialkylborane-displacing initiator is characterized by its ability to displace the trialkylborane from the protected alkylborane complex, preferably the trialkylborane:organonitrogen complex. Additionally, the initiator may be selected to be or to copolymerize with the acrylic monomer. Thus, the term "acrylic monomer and trialkylborane-displacing initiator" can refer to a single monomer that both initiates trialkylborane displacement and polymerizes or copolymerizes, or two or more separate compounds that, as a package, polymerize and initiate displacement. Examples of acrylic monomers that are also trialkylborane-displacing initiators include 2-hydroxyalkylacrylates such as 2-hydroxymethylacrylate, 2-hydroxyethylacrylate, and 2-hydroxybutylacrylate.

Examples of other suitable initiators include acids such as acetic acid, acrylic acid, methacrylic acid, formic acid, as well as isocyanates, aldehydes, ketones, acid chlorides, and anhydrides. Preferred initiators include acrylic acid and methacrylic acid and combinations thereof. The amount of initiator used is preferably not less than 1, more preferably not less than 2 weight percent, and not more than 20, more preferably not more than 10 weight percent based on the weight of the initiator, the monomer, and the thixotropic agent.

A thixotropic agent is an acrylic polymer that is advantageously included in the second part of the 2-part adhesive to adjust the viscosity of the second part to approximately match the first part, preferably so that the first and second parts have viscosities that are within 20% of each other. Preferably, the amount of thixotropic agent used is not less than about 10 and not more than 30 weight percent based on the weight of the acrylic monomer, the borane-displacing initiator, and the thixotropic agent. A preferred thixotropic agent is a polymeric acrylic such as poly(methyl acrylate), poly(ethyl acrylate), poly(*n*-propyl acrylate), poly(*n*-butyl acrylate), poly(*t*-butyl acrylate), poly(carboxyethyl acrylate), poly(methyl methacrylate), poly(ethyl methacrylate), poly(*n*-propyl methacrylate), poly(*n*-butyl methacrylate), poly(*t*-butyl methacrylate), and poly(carboxyethyl methacrylate). A more preferred thixotropic agent is poly(methyl methacrylate), which preferably has a weight average molecular weight (M_{w}) of not less than 50,000, and more preferably not less than 75,000 Daltons, and preferably not greater than 500,000, and more preferably not greater than 400,000 Daltons.

The term "low surface energy substrate" is used herein to refer to a polymeric hydrocarbon, a polymeric fluorocarbon, or a polymeric hydrofluorocarbon substrate that does not include polar substituents. Examples of low surface energy substrates include polyethylenes, polypropylenes including isotactic and syndiotactic polypropylenes, ethylene-α-olefin copolymers including as ethylene-1-octene- and ethylene-1-butene-copolymers, hydrogenated polyisoprene (also known as poly(ethylene-*alt*-propylene)), polyvinylidene fluorides, polytetrafluoroethylenes, polyesters, polyamides, polyacetals, polystyrenes, and blends thereof.

Ancillary additives such as pigments, dyes, inorganic fillers, UV stabilizers, peroxides, organic solvents, and antioxidants may be included in either or both of the parts of the 2-part formulation. The adhesive, therefore, has further applicability as a paint, a primer, or a coating.

The second aspect of the present invention is a composition comprising water, a surfactant, an acrylic monomer, a trialkylborane displacing initiator, a thixotropic agent, and, optionally, one or more ancillary additives. This composition can be combined with the trialkyborane:organoamine complex and transferred to a single-head sprayer and applied to a substrate to make an adhesive, a paint, a primer, or a coating. Alternatively the components may be kept separate and applied through a plural component sprayer.

The third aspect of the present invention is a method comprising the steps of contacting the two parts of the 2-part formulation to provide a curing adhesive and applying the curing adhesive to the substrate. The steps of contacting the parts together may be distinct or concomitant, and is preferably concomitant, that is, the two parts of the adhesive are brought into contact with each other, for example, using a bicartridge caulk gun at about the same time these components are contacting the substrate. The method of the present invention provides a simple way to apply an adhesive to a low surface energy substrate at room temperature without the aid of any surface pretreatment.

The following examples are for illustrative purposes only and are not intended to limit the scope of the invention. H29A refers to tri-*n*-butylborane:3-methoxypropylamine, containing an approximately 1:1.05 mole ratio of tri-*n*-butylborane to 3-methoxypropylamine; H29B refers to tri-*n*-butylborane:3-methoxypropylamine, containing an approximately 1:1.3 mole ratio of tri-*n*-butylborane to 3-methoxypropylamine; pphp refers to parts per hundred parts by weight.

### Example 1 - Preparation of Water-Borne Adhesive with H29A Stabilized with Polyvinylpyrrolidinone

A water-borne adhesive for bonding plastic substrates was prepared by combining at room temperature 3 parts of an acrylic resin consisting of 66.7 pphp methyl methacrylate (MMA), 17.3 pphp poly(methyl methacrylate) (PMMA, M_{w} = 300,000 Daltons), 12 pphp 2-hydroxyethyl acrylate and 4 pphp acrylic acid with 1 part of a component consisting of 60 pphp water, 24 pphp polyvinylpyrrolidinone (M_{w} = 300,000) and 16 pphp H29A. The components were manually mixed with a spatula and applied to 1" x 4" x 0.125" thick coupons of Basel 6524 isotactic polypropylene. Spacer beads with 0.005" diameter were applied to the surface of the adhesive to provide a uniform bead thickness and the laminate fixtured in a lap shear configuration. The laminate was allowed to cure for 24 hours. Testing was performed on an Instron 4201 load frame with a 1000 lb load cell using Series 9 software supplied by the manufacturer. Upon testing the samples the substrate failed at 655psi +/-50 psi at an average elongation of 0.19 " for a 0.5 inch bond overlap.

### Example 2 - Preparation of Water-Borne Adhesive with H29A Stabilized with Polyvinyl alcohol

A water-borne adhesive for bonding plastic substrates was prepared by combining at room temperature 2 parts of an acylic resin consisting of 62 pphp MMA, 16 pphp PMMA (M_{w} = 300,000), 16 pphp 2-hydroxyethyl acrylate and 6 pphp acrylic acid with 1 part of component consisting of 85 pphp water, 11 pphp polyvinyl alcohol (M_{w} = 150,000 ), and 4 pphp H29A. The components were manually mixed with a spatuala and applied to 1" x 4" x 0.125" thick coupons of Basel 6524 isotactic polypropylene. Spacer beads with 0.005" diameter were applied to the surface of the adhesive to provide a uniform bead thickness and the laminate fixtured in a lap shear configuration. The laminate was allowed to cure for 24 hours and tested as described in Example 1. The resulting lap shear samples failed by substrate failure with an average lap shear energy of 875 psi +/- 140 psi with an average elongation of 0.47 inches for a 0.5 inch substrate overlap.

### Example 3 - Preparation of Water-Borne Adhesive with PEG

A water borne adhesive for bonding plastic substrates was prepared by combing at room temperature 1 part of an acrylic resin consisting of 72 pphp MMA, 18 pphp PMMA (M_{w} = 300,000), 10 pphp acrylic acid with 1 part of a component consisting of 58 pphp water, 33 pphp polyethylene glycol (PEG, M_{w} = 20,000), and 9 pphp H29A. The components were manually mixed with a spatuala and applied to 1" x 4" x 0.125" thick coupons of Basel 6524 isotactic polypropylene. Spacer beads with 0.005" diameter were applied to the surface of the adhesive to provide a uniform bead thickness and the laminate fixtured in a lap shear configuration. The laminate was allowed to cure for 24 hours and tested as described in Example 1. The resulting lap shear sample failed by substrate failure at a lap shear energy of 429 psi after elongating 0.14 inch for a 0.5 inch overlap.

### Example 4 - Water-Borne Adhesive with H29A stabilized with Polyetheramine

A water borne adhesive for bonding plastic substrates was prepared by combining at room temperature 1 part of an acylic resin as described in Example 3 with I part of a component consisting of 70 pphp water, 25 pphp Jeffamine^{™} 2000, polyetheramine (trademark of Huntsman Chemical), and 5 pphp H29A. The components were manually mixed with a spatula and applied to 1" x 4" x 0.125" thick coupons of Basel 6524 isotactic polypropylene. Spacer beads with 0.005" diameter were applied to the surface of the adhesive to provide a uniform bead thickness and the laminate fixtured in a lap shear configuration. The laminate was allowed to cure for 24 hours and tested as described in Example 1. The resulting lap shear specimens failed by substrate failure at a lap sher energy of 605 psi +/- 70 psi after elongating 0.25" for a 0.5 inch overlap.

### Example 5 - Water-Borne Adhesive with H29A Stabilized with Sodium Salt of Polyacrylic Acid

A water borne adhesive for bonding plastic substrates was prepared by combining at room temperature 1 part of an acrylic resin component as described in Example 3 with 1 part of a component consisting of 75 pphp water, 20 pphp of a fully neutralized sodium salt of polyarcylic acid (M_{w} = 30,000) and 5 pphp of H29A. The components were manually mixed with a spatula and applied to 1" x 4" x 0.125" thick coupons of Basel 6524 isotactic polypropylene. Spacer beads with 0.005" diameter were applied to the surface of the adhesive to provide a uniform bead thickness and the laminate fixtured in a lap shear configuration. The laminate was allowed to cure for 24 hours and tested as described in Example 1. The resulting lap shear specimens failed by substrate failure at a lap shear energy of 790 psi +/- 70 psi after elongating 0.33 inches for a 0.5 inch overlap.

### Example 6 - Water-Borne Adhesive with H29A Stabilized with polyacrylamide

A water borne adhesive for bonding plastic substrates was prepared by combining at room temperature 1 part of an acrylic resin similar to that described in Example 3 with 1 part of a component consisting of 75 pphp water, 20 pphp polyacrylamide (M_{w} = 10,000 ), and 5 pphp H29A. The components were manually mixed with a spatula and applied to 1" x 4" x 0.125" thick coupons of Basel 6524 isotactic polypropylene. Spacer beads with 0.005" diameter were applied to the surface of the adhesive to provide a uniform bead thickness and the laminate fixtured in a lap shear configuration. The laminate was allowed to cure for 24 hours and tested as described in Example 1. The resulting lap shear specimen failed by substrate failure at a lap shear energy of 690 psi.

### Example 7 - Water-Borne Adhesive using Isophorone Diisocyanate Initiator

A water borne adhesive for bonding plastic substrates was prepared by combining at room temperature I part of an acrylic resin similar to that described in Example 3 except that isophorone diisocyanate was substituted for acrylic acid with 1 part of a component identical to that water containing component described in Example 6. The components were manually mixed with a spatula and applied to 1" x 4" x 0.125" thick coupons of Basel 6524 isotactic polypropylene. Spacer beads with 0.005" diameter were applied to the surface of the adhesive to provide a uniform bead thickness and the laminate fixtured in a lap shear configuration. The laminate was allowed to cure for 24 hours and tested as described in Example 1. The resulting lap shear specimen failed within the adhesive at a lap shear energy of 284 psi.

### Example 8 - Water-Borne Adhesive with H29A Stabilized with a Polyethylene Glycol

A water borne adhesive for bonding plastic substrates was prepared by combining at room temperature 1 part of an acrylic resin consisting of 65 pphp MMA, 20 pphp hydroxy butylmethacrylate, 10 pphp PMMA (M_{w}= 300,000), 5 pphp acrylic acid with 1 part of a component consisting of 90 pphp water, 5 pphp Polyox^{™} N 80 polyethylene glycol (a trademark of The Dow Chemical Company), and 5 pphp H29A. The components were manually mixed with a spatula and applied to 1" x 4" x 0.125" thick coupons of Basel 6524 isotactic polypropylene. Spacer beads with 0.005" diameter were applied to the surface of the adhesive to provide a uniform bead thickness and the laminate fixtured in a lap shear configuration. The laminate was allowed to cure for 24 hours and tested as described in Example 1 The resulting lap shear specimen failed in the substrate at a lap shear energy of 600 psi +/- 100 psi.

### Example 9 - Water-Borne Adhesive with H29A Stabilized with Teflon^{™} PFA Fluoropolymer

A water borne adhesive for bonding plastic substrates was prepare by combining at room temperature 1 part of an acrylic resin as described in Example 3 with 1 part of a component consisting of 95% of a Teflon^{™} PFA fluoropolymer (Teflon is a trademark of DuPont) water dispersion (54% solids) and 5 pphp H29A. The components were manually mixed with a spatula and applied to 1" x 4" x 0.125" thick coupons of Basel 6524 isotactic polypropylene. Spacer beads with 0.005" diameter were applied to the surface of the adhesive to provide a uniform bead thickness and the laminate fixtured in a lap shear configuration. The laminate was allowed to cure for 24 hours and tested as described in Example 1. The resulting lap shear specimen failed cohesively in the adhesive at a lap shear energy of 489 psi +/- 20 psi.

### Example 10 - Water-Borne Coating with H29B Stabilized with a Poly(acrylic acid)

A low surface energy curable paint was prepared by combining at room temperature 38.5 pphp water, 30 pphp MMA, 8.5 pphp 2-hydroxyethyl acrylate, 4.3 pphp polyacrylic acid, 1.7 pphp copper II phthalocyanine blue dye, 4.5 pphp acrylic acid, 8.5 pphp polymethyl methacrylate-co-ethyl acrylate (M_{w} 101,000, < 5% ethyl acrylate obtained from Aldrich Chemical Milwaukee, WI). This resin mixture was pre-mixed by rolling to provide a homogeneous emulsion. This blend was combined with 4.5 pphp H29B and stirred for 30 seconds. The resultant curing paint formulation was spray applied to the surface of isotactic polypropylene coupon at a thickness of 3 mils and allowed to cure for 48 hours. The painted surface was then tested for adhesion by ASTM crosshatch method D 3359-83. The coating exhibited no adhesion failure.

### Example 11 - Water-Borne Coating with H29B Stabilized with a Poly(propylene glycol)-block-poly(ethylene glycol)-block-poly(propylene glycol)bis(2-aminopropyl ether)

A low surface energy curable paint was prepared by combining at room temperature 34.85 pphp water, 31.15 pphp MMA, 9.1 pphp 2-hydroxyethyl acrylate, 5.1 pphp Poly(propylene glycol)-block-poly(ethylene glycol)-block-poly(propylene glycol)bis(2-aminopropyl ether), 1.7 pphp copper II phthalocyanine blue dye, 4.5 pphp acrylic acid, 9.1 pphp polymethyl methacrylate-co-cthyl acrylate (M_{w} 101,000, < 5% ethyl acrylate obtained from Aldrich Chemical Milwaukee, WI). This resin mixture was pre-mixed by rolling to provide a homogeneous emulsion. This blend was combined with 4.5 pphp H29B and stirred for 30 seconds. The resultant curing paint formulation was spray applied to the surface of isotactic polypropylene coupon at a thickness of 3 mils and allowed to cure for 48 hours. The painted surface was then tested for adhesion by ASTM crosshatch method D 3359-83. The coating exhibited no adhesion failure.

### Example 12 - Water-Borne Coating with H29B Stabilized with a Polyacrylamide

A low surface energy curable paint was prepared by combining at room temperature 29.85 pphp water, 31.05 pphp MMA, 9.1 pphp 2-hydroxyethyl acrylate, 10.2 pphp Polyacrylamide, 1.7 pphp copper II phthalocyanine blue dye, 4.5 pphp acrylic acid, 9.1 pphp polymethyl methacrylate-co-ethyl acrylate (M_{w} 101,000, < 5% ethyl acrylate obtained from Aldrich Chemical Milwaukee, WI). This resin mixture was pre-mixed by rolling to provide a homogeneous emulsion. This blend was combined with 4.5 pphp H29B and stirred for 30 seconds. The resultant curing paint formulation was spray applied to the surface of isotactic polypropylene coupon at a thickness of 3 mils and allowed to cure for 48 hours. The painted surface was then tested for adhesion by ASTM crosshatch method D 3359-83. The coating exhibited no adhesion failure.

## Claims

1. A 2-part adhesive formulation comprising, in a first part, water, a surfactant which is a neutral or a basic surfactant or a combination thereof, and a protected alkylborane complex and, in a second part, an acrylic monomer and a trialkylborane-displacing initiator.

2. The formulation of Claim 1 wherein protected alkylborane complex is a trialkylborane-organonitrogen complex the second part further includes an acrylic polymer as a thixotropic agent.

3. The formulation of Claim 2 wherein the thixotropie agent is a poly(methyl methacrylate).

4. The formulation of Claim 3 wherein the surfactant is a polyvinyl pyrrolidone, a polyetheramine, a polyethylene glycol, a polyethylene glycol-polypropylene glycol copolymer, a polyacrylamide, a hydroxycellulose, a polyvinyl alcohol, a polyacrylic acid salt, or a polymethacrylic acid salt, or a combination thereof.

5. The formulation of Claim 3 wherein the second part of the formulation includes an acrylic monomer selected from the group consisting of hydroxyethyl acrylate, hydroxybutyl methacrylate, and methyl methacrylate; and a trialkylborane initiator selected from the group consisting of acrylic acid and methacrylic acid.

6. The formulation of Claim 5 wherein the acrylic monomer includes methyl methacrylate and the trialkylborane initiator includes acrylic acid.

7. A 2-part adhesive formulation comprising, in a first part, water, a surfactant which is a neutral or basic surfactant or a combination thereof, and a trialkylborane-organonitrogen complex and, in a second part, methyl methacrylate, a thixotropic agent, and a trialkylborane-displacing initiator selected from the group consisting of acrylic acid, methacrylic acid, and a 2-hydroxyalkyl acrylate.

8. The 2-part adhesive of Claim 7, which includes in either the first or second part or both a pigment, a dye, a filler, or an antioxidant, or a combination thereof.

9. A composition comprising water, a surfactant which is a neutral or a basic surfactant, or a combination thereof, an acrylic monomer, a trialkylborane-displacing initiator, and a thixotropic agent.

10. The composition of Claim 9 which further includes a protected alkylborane complex.

11. The composition of Claim 10 wherein the protected alkylborane complex is a trialkylborane-organonitrogen complex.

12. The composition of Claim 10 which forms a cured adhesive.

13. A method comprising the step 1) of contacting a surfactant-stabilized aqueous dispersion of a trialkylborane-organonitrogen complex with a acrylic monomer and a trialkylborane-displacing initiator to form a curing acrylic-based adhesive; and 2) applying the curing adhesive to a low surface energy substrate, said surfactant being a neutral or a basic surfactant, or a combination thereof.

14. The method of Claim 13 wherein steps 1) and 2) are carried out concomitantly.

15. The method of Claim 13 wherein the the low surface energy substrate is selected from the group consisting of polyethylenes, polypropylenes, ethylene-α-olefin copolymers, hydrogenated polyisoprenes, polyvinylidene fluorides, polytetrafluoroethylenes, polyesters, polyamides, polyacetals, and polystyrenes.

16. The method of Claim 13 wherein the low surface energy substrate is an isotactic polypropylene.

## Patentansprüche

1. Zweiteilige Klebstoffformulierung, die in einem ersten Teil Wasser, ein Tensid, das ein neutrales oder basisches Tensid oder eine Kombination davon ist, und einen geschützten Alkylborankomplex umfasst und in einem zweiten Teil ein Acrylmonomer und einen Trialkylboran verdrängenden Initiator umfasst.

2. Formulierung nach Anspruch 1, wobei der geschützte Alkylborankomplex ein Trialkylboran-Organostickstoff-Komplex ist und der zweite Teil ferner ein Acrylpolymer als Thixotropiermittel umfasst.

3. Formulierung nach Anspruch 2, wobei das Thixotropiermittel ein Poly(methylmethacrylat) ist.

4. Formulierung nach Anspruch 3, wobei das Tensid ein Polyvinylpyrrolidon, ein Polyetheramin, ein Polyethylenglycol, ein Polyethylenglycol-Polypropylenglycol-Copolymer, ein Polyacrylamid, eine Hydroxycellulose, ein Polyvinylalkohol, ein Polyacrylsäuresalz oder ein Polymethacrylsäuresalz oder eine Kombination davon ist.

5. Formulierung nach Anspruch 3, wobei der zweite Teil der Formulierung ein Acrylmonomer umfasst, das ausgewählt ist aus der aus Hydroxyethylacrylat, Hydroxybutylmethacrylat und Methylmethacrylat bestehenden Gruppe; und einen Trialkylboraninitiator, der ausgewählt ist aus der aus Acrylsäure und Methacrylsäure bestehenden Gruppe.

6. Formulierung nach Anspruch 5, wobei das Acrylmonomer Methylmethacrylat umfasst und der Trialkylboraninitiator Acrylsäure umfasst.

7. Zweiteilige Klebstoffformulierung, die in einem ersten Teil Wasser, ein Tensid, das ein neutrales oder basisches Tensid oder eine Kombination davon ist, und einen Trialkylboran-Organostickstoff-Komplex umfasst und in einem zweiten Teil Methylmethacrylat, ein Thixotropiermittel und einen Trialkylboran verdrängenden Initiator umfasst, der ausgewählt ist aus der aus Acrylsäure, Methacrylsäure und einem 2-Hydroxyalkylacrylat bestehenden Gruppe.

8. Zweiteiliger Klebstoff nach Anspruch 7, der in dem ersten oder dem zweiten Teil oder in beiden ein Pigment, einen Farbstoff, einen Füllstoff oder ein Antioxidans oder eine Kombination davon umfasst.

9. Zusammensetzung, die Wasser, ein Tensid, das ein neutrales oder basisches Tensid oder eine Kombination davon ist, ein Acrylmonomer, einen Trialkylboran verdrängenden Initiator und ein Thixotropiermittel umfasst.

10. Zusammensetzung nach Anspruch 9, die ferner einen geschützten Alkylborankomplex umfasst.

11. Zusammensetzung nach Anspruch 10, wobei der geschützte Alkylborankomplex ein Trialkylboran-Organostickstoff-Komplex ist.

12. Zusammensetzung nach Anspruch 10, die einen gehärteten Klebstoff bildet.

13. Verfahren, bei dem 1) eine tensidstabilisierte wässrige Dispersion eines Trialkylboran-Organostickstoff-Komplexes mit einem Acrylmonomer und einem Trialkylboran verdrängenden Initiator in Kontakt gebracht wird, um einen härtenden Klebstoff auf Acrylbasis zu bilden; und 2) der härtende Klebstoff auf ein Substrat mit niedriger Oberflächenenergie aufgebracht wird, wobei das Tensid ein neutrales oder basisches Tensid oder eine Kombination davon ist.

14. Verfahren nach Anspruch 13, wobei Schritt 1) und 2) nebeneinander durchgeführt werden.

15. Verfahren nach Anspruch 13, wobei das Substrat mit niedriger Oberflächenenergie ausgewählt ist aus der aus Polyethylenen, Polypropylenen, Ethylen-α-Olefin-Copolymeren, hydrierten Polyisoprenen, Polyvinylidenfluoriden, Polytetrafluorethylenen, Polyestern, Polyamiden, Polyacetalen und Polystyrolen bestehenden Gruppe.

16. Verfahren nach Anspruch 13, wobei das Substrat mit niedriger Oberflächenenergie ein isotaktisches Polypropylen ist.

## Revendications

1. Formulation adhésive en deux parties, comprenant, dans une première partie, de l'eau, un tensioactif qui est un tensioactif neutre ou basique ou une combinaison de tels tensioactifs, et un complexe d'alkyl-borane protégé, et dans une deuxième partie, un monomère acrylique et un amorceur de déplacement de trialkyl-borane.

2. Formulation conforme à la revendication 1, dans laquelle le complexe d'alkyl-borane protégé est un complexe de trialkyl-borane et de composé organique azoté, et la deuxième partie contient en outre un polymère polyacrylique, en tant qu'agent de thixotropie.

3. Formulation conforme à la revendication 2, dans laquelle l'agent de thixotropie est un poly(méthacrylate de méthyle).

4. Formulation conforme à la revendication 3, dans laquelle le tensioactif est une poly(vinyl-pyrrolidone), un poly(éther amine), un polyéthylèneglycol, un copolymère polyéthylèneglycol-polypropylèneglycol, un polyacrylamide, une hydroxycellulose, un poly(alcool vinylique), un sel de poly(acide acrylique) ou un sel de poly(acide méthacrylique), ou une combinaison de tels polymères.

5. Formulation conforme à la revendication 3, dont la deuxième partie contient un monomère acrylique choisi dans l'ensemble formé par de l'acrylate d'hydroxyéthyle, du méthacrylate d'hydroxybutyle et du méthacrylate de méthyle, ainsi qu'un amorceur de déplacement de trialkyl-borane choisi dans l'ensemble formé par de l'acide acrylique et de l'acide méthacrylique.

6. Formulation conforme à la revendication 5, dans laquelle le monomère acrylique comprend du méthacrylate de méthyle, et l'amorceur de déplacement de trialkyl-borane comprend de l'acide acrylique.

7. Formulation adhésive en deux parties, comprenant, dans une première partie, de l'eau, un tensioactif qui est un tensioactif neutre ou basique ou une combinaison de tels tensioactifs, et un complexe de trialkyl-borane et de composé organique azoté, et dans une deuxième partie, du méthacrylate de méthyle, un agent de thixotropie et un amorceur de déplacement de trialkyl-borane, choisi dans l'ensemble formé par de l'acide acrylique, de l'acide méthacrylique et un acrylate de 2-hydroxyalkyle.

8. Formulation adhésive en deux parties, conforme à la revendication 7, qui contient, dans l'une ou l'autre des première et deuxième parties ou dans les deux, un pigment, un colorant, une charge ou un anti-oxydant, ou une combinaison de tels adjuvants.

9. Composition comprenant de l'eau, un tensioactif qui est un tensioactif neutre ou basique ou une combinaison de tels tensioactifs, un monomère acrylique, un amorceur de déplacement de trialkyl-borane et un agent de thixotropie.

10. Composition conforme à la revendication 9, qui contient en outre un complexe d'alkyl-borane protégé.

11. Composition conforme à la revendication 10, dans laquelle le complexe d'alkyl-borane protégé est un complexe de trialkyl-borane et de composé organique azoté.

12. Composition conforme à la revendication 10, qui forme un adhésif durci.

13. Procédé comportant les étapes suivantes :
1) mettre une dispersion aqueuse d'un complexe de trialkyl-borane et de composé organique azoté, stabilisée à l'aide d'un tensioactif, en contact avec un monomère acrylique et un amorceur de déplacement de trialkylborane, de manière à former un adhésif durcissable à base de polyacrylique ;
2) et appliquer cet adhésif durcissable sur un substrat de faible énergie superficielle ;
ledit tensioactif étant un tensioactif neutre ou basique ou une combinaison de tels tensioactifs.

14. Procédé conforme à la revendication 13, dans lequel les étapes (1) et (2) sont réalisées simultanément.

15. Procédé conforme à la revendication 13, dans lequel le substrat de faible énergie superficielle est choisi dans l'ensemble formé par les polyéthylènes, polypropylènes, copolymères d'éthylène et d'α-oléfine, polyisoprènes hydrogénés, poly(fluorure de vinylidène), polytétrafluoroéthylènes, polyesters, polyamides, polyacétals et polystyrènes.

16. Procédé conforme à la revendication 13, dans lequel le substrat de faible énergie superficielle est un polypropylène isotactique.
